# EUROPÄISCHE PATENTSCHRIFT

(11) **EP 3 423 727 B1**
(45) Veröffentlichungstag und Bekanntmachung des Hinweises auf die Patenterteilung: **28.10.2020**
(21) Anmeldenummer: 17705894.8
(22) Anmeldetag: 20.02.2017
(51) Int. Cl.: F16D 1/108

(54) **WELLE-NABE-VERBINDUNG**
SHAFT-HUB CONNECTION
LIAISON ARBRE-MOYEU

(30) Priorität: 29.02.2016 DE 102016203188
(43) Veröffentlichungstag der Anmeldung: 09.01.2019
(73) Patentinhaber: Bayerische Motoren Werke Aktiengesellschaft, 80809 München (DE)
(72) Erfinder: FABIAN, Karsten, 85764 Oberschleissheim (DE); LANDGRAF, Torsten, 80797 München (DE)
(86) Internationale Anmeldenummer: PCT/EP2017/053724
(87) Internationale Veröffentlichungsnummer: WO 2017/148718

(56) Entgegenhaltungen:
- EP-A1- 1 900 951
- EP-A1- 2 977 132
- WO-A1-2008/148373
- US-A1- 2015 323 014

## Beschreibung

Die Erfindung betrifft eine Welle-Nabe-Verbindung mit einer Welle, die in einem Verbindungsbereich mit einer Außenverzahnung versehen ist, und einer Nabe, die in einem Verbindungsbereich mit einer Innenverzahnung versehen ist. Die Erfindung betrifft ferner ein Verfahren zum Herstellen einer Welle-Nabe-Verbindung.

Welle-Nabe-Verbindungen sind im Stand der Technik in vielen Ausgestaltungen bekannt. Sie werden immer dort verwendet, wo zuverlässig ein Drehmoment zwischen der Welle und der Nabe übertragen werden muss. Durch die Verwendung der Innen- und der Außenverzahnung im Verbindungsbereich ergibt sich ein formschlüssiger Eingriff zwischen Welle und Nabe, sodass anders als bei einer Presspassung das maximal übertragbare Drehmoment nicht von Parametern wie der Oberflächenbeschaffenheit der aneinander anliegenden Flächen oder der Temperatur abhängt.

Es ist auch bekannt, dass die Außen- und die Innenverzahnung dazu verwendet werden können, die Welle und die Nabe relativ zueinander zu zentrieren. Werden die Verzahnungen mit geeigneter Geometrie und geeigneten Abmessungen ausgeführt, lässt sich beispielsweise eine Presspassung zwischen der Welle und der Nabe erzielen, durch die die Position der beiden Teile relativ zueinander sehr präzise eingestellt ist. Hierdurch lassen sich Rundlaufabweichungen verringern oder gar vermeiden. Allerdings lässt sich eine solche Welle-Nabe-Verbindung vergleichsweise schwer montieren.

Eine Welle-Nabe-Verbindung mit einer Außenverzahnung, die auf einem ersten Bereich mit einem geringeren Kopfkreisdurchmesser und auf einem zweiten Bereich mit einem größeren Kopfkreisdurchmesser ausgeführt ist, ist aus der US 2015/323 014 A1 bekannt.

Ein anderes Beispiel für eine Welle-Nabe-Verbindung ist aus der EP 1 900 951 A1 bekannt.

Die Aufgabe der Erfindung besteht darin, eine Welle-Nabe-Verbindung zu schaffen, die einerseits für eine gute Zentrierung der Welle relativ zur Nabe sorgt und andererseits gut montiert werden kann.

Zur Lösung dieser Aufgabe ist bei einer Welle-Nabe-Verbindung der eingangs genannten Art vorgesehen, dass die Außenverzahnung einen ersten Kopfkreisdurchmesser auf der dem axialen Ende der Welle zugewandten Seite und einen zweiten, größeren Kopfkreisdurchmesser auf der vom axialen Ende abgewandten Seite des Verbindungsbereichs aufweist, sodass sich zusammen mit der Innenverzahnung der Nabe eine Spielpassung im Bereich des ersten Kopfkreisdurchmessers und eine Presspassung im Bereich des zweiten Kopfkreisdurchmessers ergibt, wobei die Differenz zwischen dem ersten und dem zweiten Kopfkreisdurchmesser weniger als 50 µm und vorzugsweise weniger als 20 µm beträgt. Die Erfindung beruht auf dem Grundgedanken, den Verbindungsbereich der Welle in zwei Abschnitte zu unterteilen, sodass der erste Abschnitt zur Vormontage verwendet werden kann und dabei insbesondere von Hand gefügt werden kann. Der zweite Abschnitt dient zur Zentrierung der Welle relativ zur Nabe, wobei in diesem Bereich höhere Fügekräfte notwendig sind. Da die beiden Bauteile jedoch über den ersten Abschnitt des Verbindungsbereichs bereits miteinander vormontiert sind, lassen sich diese Kräfte leichter aufbringen. Besonders bevorzugt beträgt die Differenz zwischen dem ersten und dem zweiten Kopfkreisdurchmesser in der Größenordnung von 10 µm. Der erste Kopfkreisdurchmesser ist dabei gerade so weit verringert, dass die Welle und die Nabe mit geringen axialen Kräften montiert werden können, aber der Verbindungsbereich weiterhin die Welle innerhalb der Nabe abstützt, sobald die Welle und die Nabe geringfügig schräg zueinander ausgerichtet sind. Hierdurch ist ein Verkippen der Nabe auf der Welle verhindert. Abhängig von den jeweiligen Anforderungen können aber auch andere Differenzen zwischen den Kopfkreisdurchmessern verwendet werden.

Gemäß einer Ausgestaltung der Erfindung ist vorgesehen, dass die Außen- und die Innenverzahnung als Evolventenverzahnung ausgeführt sind. Eine Evolventenverzahnung lässt sich mit vergleichsweise geringem Aufwand auf die Welle aufwalzen.

Vorzugsweise ist vorgesehen, dass auf der Welle eine Mutter angeordnet ist, die mit einem Gewinde auf der Nabe zusammenwirkt. Die Mutter ermöglicht es, mit geringem Aufwand die Axialkräfte aufzubringen, die zum Einschieben des Verbindungsbereichs mit dem zweiten Kopfkreisdurchmesser in die Nabe notwendig sind. Dabei kann die Mutter sehr leicht mit dem Gewinde auf der Nabe in Eingriff gebracht werden, da die Welle und die Nabe bereits vormontiert sind; der in die Nabe eingeschobene Abschnitt des Verbindungsbereichs, der den ersten Kopfkreisdurchmesser aufweist, gewährleistet bereits eine hinreichend genaue Positionierung von Welle und Nabe relativ zueinander.

Vorzugsweise entspricht die axiale Länge des Eingriffs zwischen Mutter und Nabe etwa der Länge des Verbindungsabschnittes, der den zweiten Kopfkreisdurchmesser hat. Bei diesen Abmessungen kann der Verbindungsbereich mit dem ersten Kopfkreisdurchmesser vollständig in die Welle eingeschoben werden, bevor die Mutter auf das Gewinde der Nabe aufgeschraubt wird.

Vorzugsweise weisen die Nabe und/oder die Welle einen Axialanschlag auf. Der Axialanschlag definiert die Lage der Welle relativ zur Nabe im vollständig montierten Zustand.

Gemäß einer Ausführungsform ist der Axialanschlag als Kegel ausgeführt. Hierdurch wird eine zusätzliche Zentrierung erzielt.

Zur Lösung der oben genannten Aufgabe ist erfindungsgemäß auch ein Verfahren zum Herstellen einer Welle-Nabe-Verbindung mittels der folgenden Schritte vorgesehen: Eine Welle wird mit mindestens einem Lagerabschnitt und an einem axialen Ende mit einer Außenverzahnung versehen. Die Welle wird gehärtet, und der Lagerabschnitt und ein dem axialen Ende der Welle zugewandter Abschnitt der Außenverzahnung werden in einer Aufspannung überdreht, sodass die Außenverzahnung einen Abschnitt mit einem ersten Kopfkreisdurchmesser und einen Abschnitt mit einem zweiten Kopfkreisdurchmesser aufweist. Die Welle und eine Nabe mit zur Außenverzahnung komplementärer Innenverzahnung werden gefügt, wobei in einem ersten Schritt der erste Abschnitt der Außenverzahnung im Wesentlichen kraftfrei mit der Nabe gefügt wird und in einem zweiten Schritt der zweite Abschnitt der Außenverzahnung in die Nabe eingepresst wird. Der besondere Vorteil des Verfahrens besteht darin, dass durch das Überdrehen des Lagerabschnittes und der Außenverzahnung in einer Aufspannung sehr geringe Toleranzen der bearbeiteten Abschnitte relativ zueinander erzielt werden können. Aufgrund des Abschnittes des Verbindungsbereichs, der einen kleineren Durchmesser hat, kann die Welle-Nabe-Verbindung nahezu kraftfrei vormontiert werden. Hinsichtlich der sich dabei ergebenden Vorteile wird auf die obigen Erläuterungen verwiesen.

Vorzugsweise wird auch der zweite Abschnitt der Außenverzahnung in derselben Aufspannung überdreht. Dies gewährleistet, dass Positionstoleranzen des Lagerabschnittes der Welle relativ zum zweiten Abschnitt des Verbindungsbereichs, der für die Zentrierung der Welle relativ zur Nabe maßgeblich ist, so weit wie möglich verhindert werden.

Die zum axialen Verpressen nötige Kraft wird vorzugsweise dadurch aufgebracht, dass eine axial auf der Welle festgelegte Mutter auf die Nabe aufgeschraubt wird. Auf diese Weise lässt sich sehr kontrolliert die nötige Axialkraft erzeugen.

Die Erfindung wird nachfolgend anhand einer Ausführungsform beschrieben, die in den beigefügten Zeichnungen dargestellt ist. In diesen zeigen:
- Figur 1 eine erfindungsgemäße Welle-Nabe-Verbindung in einem Schnitt;
- Figur 2 schematisch die bei der Welle-Nabe-Verbindung von Figur 1 verwendete Nabe;
- Figur 3 schematisch eine Stirnansicht des Verbindungsbereichs der Nabe von Figur 2;
- Figur 4 die bei der Welle-Nabe-Verbindung von Figur 1 verwendete Welle in einer abgebrochenen, teilgeschnittenen Seitenansicht; und
- Figur 5 schematisch eine Stirnansicht des Verbindungsbereichs der Welle von Figur 4.

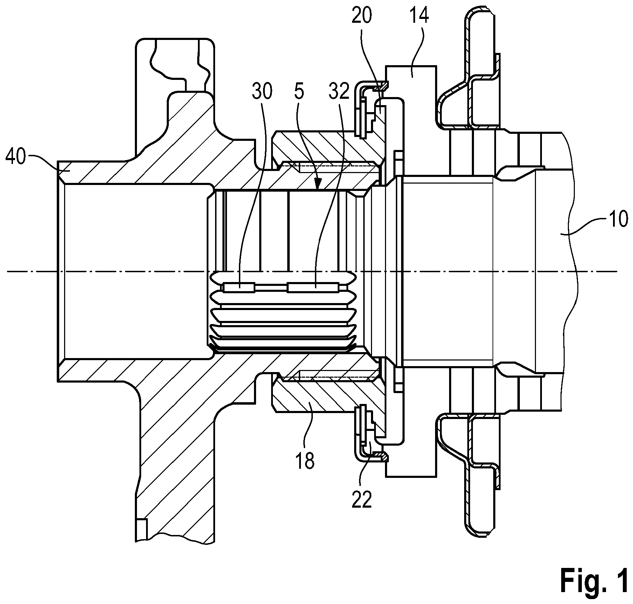

In Figur 1 ist eine Welle-Nabe-Verbindung 5 einer Welle 10 mit einer Nabe 40 gezeigt. Bei der Welle kann es sich insbesondere um die Welle des Antriebskegelrades eines Hinterachsgetriebes eines Kraftfahrzeugs handeln, und bei der Nabe 40 kann es sich insbesondere um das abtriebsseitige Ende einer Gelenkwelle oder Kardanwelle handeln.

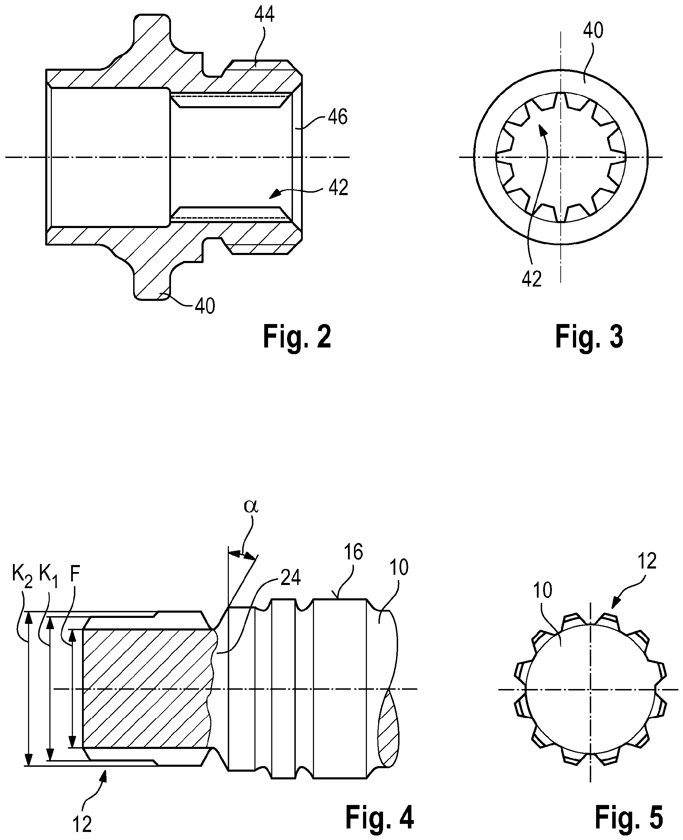

Die Welle-Nabe-Verbindung ist beim gezeigten Ausführungsbeispiel gebildet durch eine Innenverzahnung 42 (siehe die Figuren 2 und 3), die im Inneren der Nabe 40 vorgesehen ist, und durch eine Außenverzahnung 12, die an einem axialen Ende der Welle 10 vorgesehen ist (siehe die Figuren 4 und 5). Die Verzahnungen 12, 42 sind hier als Evolventenverzahnungen ausgeführt. Grundsätzlich sind auch andere Zahnprofile möglich.

Die Außenverzahnung 12 und die Innenverzahnung 42 definieren jeweils einen Verbindungsbereich an der Welle 10 bzw. der Nabe 40, in welchem diese miteinander formschlüssig gekoppelt sind, wenn die Welle-Nabe-Verbindung hergestellt ist (siehe Figur 1).

Die Innenverzahnung 42 ist in einem Räumverfahren hergestellt, sodass sie über ihre gesamte axiale Länge einen konstanten Fußkreisdurchmesser und einen konstanten Kopfkreisdurchmesser hat.

Auf der Außenseite der Nabe 40 ist auf ihrer der Welle 10 zugewandten Seite ein Außengewinde 44 vorgesehen, dessen Funktion später erläutert wird.

Die Außenverzahnung 12 weist über ihre gesamte axiale Länge einen konstanten Fußkreisdurchmesser F auf. Nicht konstant ist allerdings der Kopfkreisdurchmesser der Außenverzahnung 12. Auf der dem axialen Ende der Welle 10 zugewandten Seite ist die Außenverzahnung 12 mit einem ersten Kopfkreisdurchmesser K₁ ausgeführt, während die Außenverzahnung 12 in einem sich daran anschließenden, auf der vom axialen Ende abgewandten Seite einen zweiten Kopfkreisdurchmesser K₂ aufweist. Der zweite Kopfkreisdurchmesser K₂ ist dabei etwas größer als der erste Kopfkreisdurchmesser K₁. Der Durchmesserunterschied ist in Figur 4 stark vergrößert dargestellt. Tatsächlich ist in der Praxis eine Durchmesserdifferenz in der Größenordnung von 10 µm vorteilhaft.

Die Außenverzahnung 12 und die Innenverzahnung 42 sind in ihren Abmessungen so aneinander angepasst, dass die Kopffläche 30 (siehe Figur 1) der Zähne der Außenverzahnung 12 in dem Abschnitt mit dem kleineren Kopfkreisdurchmesser K₁ eine Spielpassung mit der Fußfläche zwischen den Zähnen der Innenverzahnung 42 bildet, während die Kopffläche (32) der Zähne der Außenverzahnung 12 im Abschnitt mit dem größeren Kopfkreisdurchmesser K₂ eine Presspassung mit den Fußflächen zwischen den Zähnen der Innenverzahnung 42 eingeht.

Auf der Welle 10 ist in axialer Richtung innerhalb der Außenverzahnung 12 ein Befestigungselement 14 angeordnet, das beispielsweise eine Mutter sein kann. Mit dem Befestigungselement 14 kann beispielsweise ein (hier nicht gezeigter) Lagerring auf einer Lagerfläche 16 der Welle 10 axial verspannt werden.

Am Befestigungselement 14 ist eine Mutter 18 angebracht, die relativ zum Befestigungselement 14 drehbar ist, jedoch in axialer Richtung an dieser fixiert ist. Zu diesem Zweck ist die Mutter 18 mit einem in axialer Richtung vorstehenden Bund 20 versehen, der hinter eine Schulter 22 des Befestigungselements 14 eingreift. Der Bund 20 kann beispielsweise elliptisch ausgeführt sein, sodass er, wenn die Mutter 18 leicht gekippt wird, hinter die Schulter 22 gebracht werden kann.

Die axiale Länge der Mutter 18 liegt etwa in der Größenordnung der axialen Länge des Abschnittes der Außenverzahnung 12, die den größeren Kopfkreisdurchmesser K₂ hat.

Die Außenverzahnung 12 wird an der Welle 10 vorzugsweise durch Warmwalzen hergestellt. Anschließend wird die Welle 10 gehärtet. In einem weiteren Bearbeitungsschritt wird die Außenverzahnung 12 überdreht, also in einem Drehverfahren spanend bearbeitet. Dabei werden sowohl der erste Kopfkreisdurchmesser K₁ als auch der zweite Kopfkreisdurchmesser K₂ erzeugt. In derselben Aufspannung wird auch die Lagerfläche 16 überdreht. Auf diese Weise ist gewährleistet, dass insbesondere der Abschnitt der Außenverzahnung 12, der den zweiten Kopfkreisdurchmesser K₂ aufweist, und die Lagerfläche 16 keinerlei Lageabweichung oder sonstige Toleranzen relativ zueinander haben, wie sie bei einer Bearbeitung mit einem Umspannen zwischen den einzelnen Bearbeitungsschritten auftreten könnten.

An die Außenverzahnung 12 der Welle 10 schließt sich auf der vom axialen Ende abgewandten Seite eine axiale Anschlagfläche 24 an, die als flacher Kegel mit einem Kegelwinkel α in der Größenordnung von 30° ausgeführt ist. Mit der Kegelfläche 24 kann eine komplementäre Kegelfläche 46 an der Nabe 40 zusammenwirken.

Um die Nabe 40 an der Welle 10 zu montieren, wird der mit dem ersten Kopfkreisdurchmesser K₁ versehene Abschnitt der Außenverzahnung 12 in die Innenverzahnung 42 eingeschoben. Der erste Kopfkreisdurchmesser K₁ ist dabei relativ zur Innenverzahnung 42 so bemessen, dass eine Spielpassung vorliegt. Dementsprechend sind die nötigen Fügekräfte sehr gering. Insbesondere können die beiden Bauteile von Hand ineinander montiert werden.

Im vormontierten Zustand liegt die Mutter 18 unmittelbar vor dem ersten Gewindegang des Gewindes 44. Der Eingriff des mit dem ersten Kopfkreisdurchmesser K₁ versehenen Abschnittes der Außenverzahnung 12 in die Innenverzahnung 42 gewährleistet, dass die Welle 10 und die Nabe 40 so weit konzentrisch sind, dass die Mutter 18 gut von Hand auf das Gewinde 44 aufgeschraubt werden kann. Anschließend kann die Mutter 18 maschinell weitergedreht werden, sodass die Nabe 40 auch auf den Abschnitt der Außenverzahnung 12 gezogen wird, der den zweiten, größeren Kopfabschnitt K₂ aufweist.

Der Montagevorgang ist abgeschlossen, sobald die Konusflächen 24, 46 in axialer Richtung aneinander anliegen.

Die Presspassung im Bereich des Abschnittes der Außenverzahnung 12, der den größeren Kopfkreisdurchmesser K₂ aufweist, gewährleistet eine Zentrierung der Welle 10 relativ zur Nabe 40. Sollten auf die Nabe 40 relativ zur Welle 10 erhöhte Kippkräfte wirken, gelangt das außen liegende Ende des mit dem kleineren Kopfkreisdurchmesser K₁ ausgeführten Abschnittes der Außenverzahnung 12 in Anlage an der Nabe 40, da aufgrund der sehr geringen Durchmesserdifferenz zwischen den beiden Kopfkreisdurchmessern K₁, K₂ bereits eine sehr geringe Schrägstellung ausreicht, damit auch der erste Abschnitt der Außenverzahnung 12 eine Zentrierungswirkung übernimmt.

Grundsätzlich sind auch andere Konstruktionen als die Mutter 18 denkbar, mit denen die nötige Axialkraft zum Fügen der Welle-Nabe-Verbindung aufgebracht werden kann.

## Patentansprüche

1. Welle-Nabe-Verbindung (5) mit einer Welle (10), die in einem Verbindungsbereich mit einer Außenverzahnung (12) versehen ist, und einer Nabe (40), die in einem Verbindungsbereich mit einer Innenverzahnung (42) versehen ist, wobei, dass die Außenverzahnung (12) einen ersten Kopfkreisdurchmesser (K₁) auf der dem axialen Ende der Welle (10) zugewandten Seite und einen zweiten, größeren Kopfkreisdurchmesser (K₂) auf der vom axialen Ende abgewandten Seite des Verbindungsbereichs aufweist, so dass sich zusammen mit der Innenverzahnung (42) der Nabe (40) eine Spielpassung im Bereich des ersten Kopfkreisdurchmessers (K₁) und eine Presspassung im Bereich des zweiten Kopfkreisdurchmessers (K₂) ergibt, **dadurch gekennzeichnet, dass** die Differenz zwischen dem ersten und dem zweiten Kopfkreisdurchmesser (K₁, K₂) weniger als 50 µm und vorzugsweise weniger als 20 µm beträgt.

2. Welle-Nabe-Verbindung nach Anspruch 1, **dadurch gekennzeichnet, dass** die Differenz zwischen dem ersten und dem zweiten Kopfkreisdurchmesser (K₁, K₂) in der Größenordnung von 10 µm beträgt.

3. Welle-Nabe-Verbindung nach einem der vorhergehenden Ansprüche, **dadurch gekennzeichnet, dass** die Außen- und die Innenverzahnung (12, 42) als Evolventenverzahnung ausgeführt sind.

4. Welle-Nabe-Verbindung nach einem der vorhergehenden Ansprüche, **dadurch gekennzeichnet, dass** auf der Welle (10) eine Mutter (18) angeordnet ist, die mit einem Gewinde (44) auf der Nabe (40) zusammenwirkt.

5. Welle-Nabe-Verbindung nach Anspruch 4, **dadurch gekennzeichnet, dass** die axiale Länge des Eingriffs zwischen Mutter (18) und Nabe (40) etwa der Länge des Verbindungsabschnittes entspricht, der den zweiten Kopfkreisdurchmesser (K₂) hat.

6. Welle-Nabe-Verbindung nach einem der vorhergehenden Ansprüche, dass die Nabe (10) und/oder die Welle (40) einen Axialanschlag (24, 46) aufweisen, insbesondere einen flachen Kegel.

7. Verfahren zum Herstellen einer Welle-Nabe-Verbindung (5) mittels der folgenden Schritte:
- eine Welle (10) wird mit mindestens einer Lagerfläche (16) und an einem axialen Ende mit einer Außenverzahnung (12) versehen;
- die Welle (10) wird gehärtet;
- die Lagerfläche (16) und ein dem axialen Ende der Welle (10) zugewandter Abschnitt der Außenverzahnung (12) werden in einer Aufspannung überdreht, so dass die Außenverzahnung (12) einen Abschnitt mit einem ersten Kopfkreisdurchmesser (K₁) und einen Abschnitt mit einem zweiten Kopfkreisdurchmesser (K₂) aufweist; und die Differenz zwischen dem ersten und dem zweiten Kopfkreisdurchmesser (K₁, K₂) weniger als 50µm und vorzugsweise weniger als 20µm beträgt;
- die Welle (10) und eine Nabe (40) mit zur Außenverzahnung (12) komplementärer Innenverzahnung (42) werden gefügt, wobei in einem ersten Schritt der erste Abschnitt der Außenverzahnung (12) im Wesentlichen kraftfrei mit der Nabe (40) gefügt wird und in einem zweiten Schritt der zweite Abschnitt der Außenverzahnung (12) in die Nabe (40) eingepresst wird.

8. Verfahren nach Anspruch 7, **dadurch gekennzeichnet, dass** auch der zweite Abschnitt der Außenverzahnung (12) in derselben Aufspannung überdreht wird.

9. Verfahren nach Anspruch 7 oder Anspruch 8, **dadurch gekennzeichnet, dass** die zum axialen Verpressen nötige Kraft aufgebracht wird, indem eine axial auf der Welle (10) festgelegte Mutter (18) auf die Nabe (40) aufgeschraubt wird.

## Claims

1. Shaft-hub connection (5) with a shaft (10), which is provided with an external toothing arrangement (12) in a connecting region, and a hub (40), which is provided with an internal toothing arrangement (42) in a connecting region, wherein the external toothing arrangement (12) has a first tip diameter (K₁) on the side facing the axial end of the shaft (10) and a second, larger tip diameter (K₂) on that side of the connecting region which faces away from the axial end, so that together with the internal toothing arrangement (42) of the hub (40), a clearance fit is created in the region of the first tip diameter (K₁) and an interference fit is created in the region of the second tip diameter (K₂), **characterized in that** the difference between the first and the second tip diameters (K₁, K₂) is less than 50 µm and preferably less than 20 µm.

2. Shaft-hub connection according to Claim 1, **characterized in that** the difference between the first and the second tip diameters (K₁, K₂) is in the order of magnitude of 10 µm.

3. Shaft-hub connection according to either of the preceding claims, **characterized in that** the external and the internal toothing arrangements (12, 42) are designed as involute toothing arrangements.

4. Shaft-hub connection according to one of the preceding claims, **characterized in that** a nut (18), which interacts with a thread (44) on the hub (40), is arranged on the shaft (10).

5. Shaft-hub connection according to Claim 4, **characterized in that** the axial length of the engagement between nut (18) and hub (40) corresponds approximately to the length of the connecting section which has the second tip diameter (K₂).

6. Shaft-hub connection according to one of the preceding claims, that the hub (10) and/or the shaft (40) have an axial stop (24, 46), especially a flat cone.

7. Method for producing a shaft-hub connection (5) by means of the following steps:
- provision is made for a shaft (10) with at least one bearing surface (16) and with an external toothing arrangement (12) on an axial end;
- the shaft (10) is hardened;
- the bearing surface (16) and a section of the external toothing arrangement (12), said section facing the axial end of the shaft (10), are turned in one chucking operation, so that the external toothing arrangement (12) has a section with a first tip diameter (K₁) and a section with a second tip diameter (K₂); and the difference between the first and the second tip diameters (K₁, K₂) is less than 50 µm and preferably less than 20 µm;
- the shaft (10) and a hub (40) with an internal toothing arrangement (42) complementary to the external toothing arrangement (12) are joined, wherein, in a first step, the first section of the external toothing arrangement (12) is joined to the hub (40) in a substantially force-free manner and, in a second step, the second section of the external toothing arrangement (12) is pressed into the hub (40) .

8. Method according to Claim 7, **characterized in that** the second section of the external toothing arrangement (12) is also turned in the same chucking operation.

9. Method according to Claim 7 or Claim 8, **characterized in that** the force required for the axial pressing is applied by a nut (18), fixed axially on the shaft (10), being screwed onto the hub (40).

## Revendications

1. Liaison arbre-moyeu (5) comprenant un arbre (10), qui est muni d'une denture externe (12) dans une zone de liaison, et un moyeu (40), qui est muni d'une denture interne (42) dans une zone de liaison, la denture externe (12) présentant un premier diamètre de cercle de tête (K₁) sur le côté tourné vers l'extrémité axiale de l'arbre (10) et un deuxième diamètre de cercle de tête (K₂) plus grand sur le côté détourné de l'extrémité axiale de la zone de liaison, de telle sorte que, conjointement avec la denture interne (42) du moyeu (40), un ajustement avec jeu soit obtenu dans la zone du premier diamètre de cercle de tête (K₁) et un ajustement serré soit obtenu dans la zone du deuxième diamètre de cercle de tête (K₂), **caractérisée en ce que** la différence entre le premier et le deuxième diamètre de cercle de tête (K₁, K₂) est inférieure à 50 µm et de préférence inférieure à 20 µm.

2. Liaison arbre-moyeu selon la revendication 1, **caractérisée en ce que** la différence entre le premier et le deuxième diamètre de cercle de tête (K₁, K₂) est de l'ordre de grandeur de 10 µm.

3. Liaison arbre-moyeu selon l'une quelconque des revendications précédentes, **caractérisée en ce que** la denture externe et la denture interne (12, 42) sont configurées sous la forme d'une denture à développante.

4. Liaison arbre-moyeu selon l'une quelconque des revendications précédentes, **caractérisée en ce qu'**un écrou (18) est agencé sur l'arbre (10), qui coopère avec un filetage (44) sur le moyeu (40).

5. Liaison arbre-moyeu selon la revendication 4, **caractérisée en ce que** la longueur axiale de l'engrènement entre l'écrou (18) et le moyeu (40) correspond approximativement à la longueur de la section de liaison qui a le deuxième diamètre de cercle de tête (K₂).

6. Liaison arbre-moyeu selon l'une quelconque des revendications précédentes, que le moyeu (10) et/ou l'arbre (40) comprennent une butée axiale (24, 46), notamment un cône plat.

7. Procédé de fabrication d'une liaison arbre-moyeu (5) au moyen des étapes suivantes :
- un arbre (10) est muni d'au moins une surface de palier (16) et d'une denture externe (12) au niveau d'une extrémité axiale ;
- l'arbre (10) est durci ;
- la surface de palier (16) et une section, tournée vers l'extrémité axiale de l'arbre (10), de la denture externe (12) sont surfilées dans un ablocage, de telle sorte que la denture externe (12) comprenne une section ayant un premier diamètre de cercle de tête (K₁) et une section ayant un deuxième diamètre de cercle de tête (K₂) ; et la différence entre le premier et le deuxième diamètre de cercle de tête (K₁, K₂) est inférieure à 50 µm et de préférence inférieure à 20 µm ;
- l'arbre (10) et un moyeu (40) ayant une denture interne (42) complémentaire de la denture externe (12) sont assemblés, dans une première étape, la première section de la denture externe (12) étant assemblée essentiellement sans force avec le moyeu (40) et, dans une deuxième étape, la deuxième section de la denture externe (12) étant pressée dans le moyeu (40).

8. Procédé selon la revendication 7, **caractérisé en ce que** la deuxième section de la denture externe (12) est également surfilée dans le même ablocage.

9. Procédé selon la revendication 7 ou la revendication 8, **caractérisé en ce que** la force nécessaire pour la compression axiale est appliquée en vissant un écrou (18), fixé axialement sur l'arbre (10), sur le moyeu (40).
